Europäisches Patentamt

European Patent Office

Office européen des brevets

(19)

(11) **EP 1 143 483 A1**

(12) **EUROPÄISCHE PATENTANMELDUNG**

(43) Veröffentlichungstag:
**10.10.2001 Patentblatt 2001/41**

(51) Int Cl.[7]: **H01J 61/30**

(21) Anmeldenummer: **01106775.8**

(22) Anmeldetag: **17.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **08.04.2000 DE 10017696**

(71) Anmelder:
• **Schott Glas**
 **55122 Mainz (DE)**
 Benannte Vertragsstaaten:
 **BE DE FR IT NL**
• **CARL-ZEISS-STIFTUNG**
 **trading as SCHOTT GLAS**
 **55122 Mainz (DE)**
 Benannte Vertragsstaaten:
 **GB**

(72) Erfinder:
• **Melson, Sabine, Dr.**
 **55124 Mainz (DE)**
• **Nass, Peter, Dr.**
 **55120 Mainz (DE)**

(74) Vertreter: **Fuchs Mehler Weiss & Fritzsche Patentanwälte**
 **Postfach 46 60**
 **65036 Wiesbaden (DE)**

(54) **Transparente Abdeckung der Strahlungsquelle von Lampen**

(57) Derartige Abdeckungen sind hohen thermischen Belastungen ausgesetzt und erfordern daher den Einsatz von Spezialgläsern, wie Borosilicatglas oder einer Glaskeramik.

Ohne zusätzliche Poliermaßnahmen, die das Produkt verteuern, weisen die bekannten Abdeckungen eine hohe Oberflächenrauheit auf, die sich ungünstig auf das Streuverhalten und die Reinigungsfreundlichkeit der Abdeckung auswirkt.

Die Erfindung sieht vor, die Abdeckung aus einem Glaskörper aus thermisch vorspannbarem, gefloateten Aluminosilicatglas oder einer darauf keramisierten gefloateten Glaskeramik mit einer Oberflächen-Rauheit von $R_a \leq 0,02$ µm und/oder $R_q \leq 0,01$ µm herzustellen.

EP 1 143 483 A1

**Beschreibung**

Die Erfindung bezieht sich auf eine transparente Abdeckung der Strahlungsquelle von Lampen, einschließlich von Leuchten.

Als transparente Abdeckung von Lampen wird typischerweise gemäß dem Stand der Technik Ca/Na-Glas, Borosilicatglas oder Glaskeramik eingesetzt. Die Wahl des Glases bzw. der Glaskeramik richtet sich nach den jeweiligen thermischen und mechanischen Anforderungen, die an das Material gestellt werden.

Ca/Na-Glas wird als thermisch bzw. chemisch vorgespanntes Glas eingesetzt. Ist die maximale Temperaturbelastung größer als 280° C oder gibt es einen großen Temperaturgradienten im Glas, der zu hohen Spannungen mit Bruchfolge führen kann, so wird Borosilicatglas verwendet. Borosilicatglas läßt sich auch thermisch vorspannen. Durch das thermische Vorspannen wird die mechanische Festigkeit erhöht, als auch die Beständigkeit gegen Temperaturgradienten. Das Borosilicatglas hat eine höhere Temperaturbelastbarkeit in thermisch vorgespannter und nicht vorgespannter Form als das chemisch oder thermisch vorgespannte Ca/Na-Glas. Die maximale Temperaturbelastbarkeit von Borosilicatglas liegt kurzzeitig bei bis zu 500° C. Die maximale Temperaturbelastbarkeit von thermisch vorgespanntem Kalk-Natron-Glas liegt hingegen bei ca. 350° C, da die Vorspannung durch hohe Temperaturen wieder abgebaut wird.

Ist ein thermisch vorgespanntes Glas, z.B. ein Sicherheitsglas, das seine Eigenschaften auch noch bei maximalen Temperaturen > 350° C behält, erforderlich, so kann ein thermisch vorgespanntes Alumosilicatglas diese Anforderung erfüllen. Bei Temperaturbelastungen, die durch Borosilicatglas oder vorgespanntes Alumosilicatglas nicht erfüllt werden können, ist eine Glaskeramik notwendig. Diese kann völlig transparent oder auch eingefärbt sein.

Die Oberfläche eines Alumosilicatglases, das zur Glaskeramik umgewandelt werden kann, ist bedingt durch das Walzen beim Herstellungsprozeß strukturiert und uneben. Sie ähnelt der einer Orangenhaut. In dieser makroskopischen Struktur befinden sich vereinzelt kleine Löcher oder Erhebungen von einem Durchmesser bis zu 0,5 mm. In den Vertiefungen, als auch hinter den Erhebungen der Oberfläche setzt sich der Schmutz fest und läßt sich mechanisch schwer oder sogar nicht mehr entfernen. Speziell Reinigungsschaber und Schwämme sind bei diesem Einsatz in ihrer mechanischen Reinigungsweise beschränkt wirksam. Dabei ist gerade der Schwamm und der Schaber oftmals das Reinigungsmittel, das den besten Reinigungsgrad erzielt. Die Oberflächenstruktur eines gewalzten Alumosilicatglases beeinflußt auch die Qualität einer Beschichtung auf diesem Glas/Glaskeramik in der Form, daß unerwünschte Oberflächenfehler auftreten. Um dies zu vermeiden, wird das Glas/Glaskeramik vor dem Beschichten auch je nach Anwendungsfall poliert. Eine glatte Oberfläche eines Glases bzw. einer Glaskeramik kann z.B. durch Schleifen mit anschließender Politur erreicht werden. Typischerweise wird mit einem Korn von ca. 100 μ vorgeschliffen. Es folgt das Schleifen mit einem Korn von 12 - 15 μ. Die Feinpolitur erfolgt dann mit einem feinerem Korn. Eine glatte Oberfläche nach dem Polieren kann auch durch eine Beschichtung, wie z.B. mit $SnO_2$, erzeugt werden.

Die vorstehenden bekannten Methoden zur Erzeugung einer hochtemperaturbeständigen transparenten Abdeckung der Strahlungsquelle von Lampen mit einer glatten Oberfläche, benötigen jedoch zusätzliche Schritte nach der Herstellung der Glas-/Glaskeramikabdeckung, was deren Herstellungskosten erhöht.

Der Erfindung liegt die Aufgabe zugrunde, eine transparente Abdeckung der Strahlungsquelle von Lampen aus Alumosilicatglas zu schaffen, die ohne nachträgliche Arbeitsschritte eine glatte Oberfläche besitzt.

Die Lösung dieser Aufgabe gelingt erfindungsgemäß durch eine transparente Abdeckung nach Anspruch 1.

Die erfindungsgemäße Abdeckung, die je nach den thermischen Anforderungen aus dem gefloateten Alumosilicatglas, bei gefordertem Sicherheitsglas in thermisch vorgespannter Form, oder aus der daraus gefloateten Glaskeramik besteht, besitzt eine Oberflächenqualität, die derjenigen eines Kalk-Natron-Floatglases gleicht. Durch die beim Floaten entstehende, und ggf. bei der Keramisierung aufrecht erhaltene glatte Oberfläche sind keine zusätzlichen, polierenden Schritte nach der Herstellung des Glases bzw. der Glaskeramik notwendig. Die Oberfläche ist dadurch leicht zu reinigen und eignet sich ohne Politur zum Beschichten.

Ferner ist das Streuverhalten geringer und die Abdeckung weist eine hohe Temperaturbeständigkeit auf.

Die Abdeckung kann dabei sowohl als planer Glas-/Glaskeramikkörper oder in verformter Konfiguration vorliegen.

Enthält der Glaskörper, wie später noch dargestellt wird, einen Keimbildner in Form von $TiO_2$, so weist die Abdeckung mit Vorteil einen integrierten UV-Schutz auf. Diese UV-Strahlen können somit ohne zusätzliche Filter die Personen, die sich im Strahlungsbereich der Lampen aufhalten, nicht schädigen.

Die Begriffe der Oberflächenrauheit werden insbesondere in der DIN 4762 näher erläutert. So ist der Mittenrauhwert $R_a$ das arithmetische Mittel von den absoluten Höhenabweichungen der mittleren Ebene der arithmetische Mittelwert der absoluten Beträge der Abstände des Istprofils vom mittleren Profil. Dieses mittlere Profil ergibt sich dadurch, daß man durch das Istprofil innerhalb einer Bezugsstrecke ein Profil so legt, daß die Summe der werkstofferfüllten Flächenstücke des Istprofils oberhalb und die Summe der werkstofffreien Flächenstücke unterhalb gleich groß sind. In Anlehnung an DIN 4762 wird der Rq = quadratische Mittenrauhwert mittels Weißlicht-Interferenz-Mikroskopie (Meßfläche: 0,6 x 0,5 mm) bestimmt. Formelmäßig drückt sich dies aus wie folgt:

$$R_a = \frac{(|Z_1| + |Z_2| + |Z_3| + \ldots + |Z_n|)}{N}$$

$$R_q = \sqrt{\frac{(Z_1^2 + Z_2^2 + Z_3^2 + \ldots + Z_n^2)}{N}}$$

Das Herstellen von flachen Glaskeramikkörpern durch Floaten ist an sich bekannt.

Prinzipiell können alle bekannten gefloateten Glaskeramiken für die Herstellung des erfindungsgemäßen, reinigungsfreundlichen Glaskeramikkörpers verwendet werden.

Um eine besonders hohe Oberflächenqualität und damit eine entsprechend hohe Reinigungsfreundlichkeit zu erzielen, wird jedoch bevorzugt als Ausgangsglas für die Glaskeramik ein floatbares, thermisch vorspannbares und in eine Glaskeramik mit Hochquarz-Mischkristallen oder Keatit-Mischkristallen als Hauptkristallphase umwandelbares Glas verwendet, bei dem die Entstehung störender Oberflächendefekte beim Floaten durch die Begrenzung der Gehalte von Pt auf <300 ppb, Rh auf <3,0 ppb und ZnO auf <1,5 Gew.-%, sowie SnO$_2$ auf < 1 Gew. % vermieden, sowie indem das Glas bei der Schmelze ohne Verwendung der üblichen Läutermittel Arsen- oder Antimonoxid geläutert wird.

Diese Gläser zeichnen sich somit durch eine Zusammensetzung aus, welche es erlaubt, die Entstehung störender Oberflächendefekte beim Floaten zu vermeiden. Floatanlagen bestehen üblicherweise aus der Schmelzwanne, in der das Glas geschmolzen und geläutert wird, einem Interface, welches den Übergang von der oxidischen Atmosphäre in der Schmelzwanne in die reduzierende Atmosphäre des nachfolgenden Anlageteils, des Floatteils, gewährleistet, in dem die Formgebung des Glases durch Aufgießen auf ein flüssiges Metall, meist Sn, in einer reduzierenden Atmosphäre von Formiergas, vorgenommen wird. Die Formgebung des Glases erfolgt durch Glattfließen auf dem Sn-Bad und durch sogenannte Top-Roller, die auf die Glasoberfläche eine Kraft ausüben. Während des Transportes auf dem Metallbad erkaltet das Glas und wird am Ende des Floatteiles abgehoben und in einen Kühlofen überführt.

Während der Bildung der Glasoberfläche und des Transportes im Floatbad können Wechselwirkungen zwischen Glas und Floatatmosphäre oder dem Sn-Bad zu störenden Oberflächendefekten führen.

Wenn das Glas mehr als 300 ppb Pt oder mehr als 30 ppb Rh in gelöster Form enthält, können sich durch die reduzierenden Bedingungen in der Glasoberfläche metallische Ausscheidungen von Pt- oder Rh-Partikeln bilden, die als wirksame Keime für große, bis

100 µm große, Hochquarz-Mischkristalle dienen und so eine störende Oberflächenkristallisation bewirken. Verwendung finden diese Materialien insbesondere als Elektroden, Auskleidung, Rührer, Transportrohre, Schieber, usw.. Bei Anlagen zur Durchführung des Verfahrens zur Herstellung vorgenannter Glaskeramik werden daher zur Vermeidung der Entstehung von Oberflächenkristallen Einbauten von Werkstoffen aus Pt bzw. Rh weitgehend vermieden und durch keramische Materialien ersetzt bzw. wird deren Belastung in der Schmelzwanne bzw. Interface so gestaltet, daß die genannten Gehalte nicht überschritten werden.

Der ZnO-Gehalt ist auf 1,5 Gew.-% begrenzt. Es hat sich gezeigt, daß unter den reduzierenden Bedingungen des Floatens das Zink in der Oberfläche des Glases verarmt. Es wird dabei angenommen, daß das Zink an der Glasoberfläche teilweise reduziert wird, wodurch es aufgrund des höheren Dampfdruckes von Zn gegenüber dem Zn$^{2+}$ in die Floatatmosphäre verdampft. Neben der für den Betrieb der Floatanlage unerwünschten Verdampfung und Abscheidung des Zn an kälteren Stellen, ist die ungleichmäßige Verteilung des Zn im Glas an der Entstehung von kritischen oberlächennahen Kristallbändern beteiligt. Diese Kristallbänder aus großen Hochquarz-Mischkristallen entstehen in Oberflächennähe dort, wo der Zn-Gehalt im Glas wieder nahezu auf den Ausgangswert angestiegen ist. Es ist daher zweckmäßig, den Ausgangswert von Anfang an klein zu halten.

Der Gehalt des Glases an SnO$_2$ ist auf weniger als 1 Gew.-% begrenzt. Durch Einwirkung der reduzierenden Bedingungen im Floatteil wird das SnO$_2$ nämlich in der Glasoberfläche z.T. reduziert. Es bilden sich überraschenderweise Kügelchen aus metallischem Sn im Glas in der unmittelbaren Glasoberfläche, die sich beim Abkühlen oder Reinigen zwar leicht entfernen lassen, jedoch kugelförmige Löcher in der Glasoberfläche zurücklassen, die für die Anwendung äußerst störend sind.

Diese Kügelchen können vermieden werden, wenn der Gehalt an SnO$_2$ sehr gering ist.

Die vorgenannten Ausgangs-Gläser werden ohne Verwendung der für Gläser aus dem Li$_2$O-Al$_2$O$_3$-SiO$_2$-System üblichen Läutermittel Arsen- und/oder Antimonoxid geläutert. Unter der Einwirkung der reduzierenden Bedingungen beim Floaten werden nämlich die genannten Läutermittel unmittelbar an der Glasoberfläche reduziert und bilden störende und visuell auffällige metallische Beläge. Die Entfernung dieser für die Anwendung störenden und toxikologisch bedenklichen Beläge durch Schleifen und Polieren ist aus wirtschaftlichen Gründen unvorteilhaft. Um die Beläge zu vermeiden, wird daher zweckmäßig zum Erreichen einer geringen Blasenzahl wenigstens ein alternatives chemisches Läutermittel, wie z.B. SnO$_2$, CeO$_2$, Sulfatverbindungen, Chloridverbindungen, bevorzugt 0,2 - 0,6 Gew.-% SnO$_2$ der Glasschmelze zugesetzt ist. Alternativ kann die Glasschmelze auch physikalisch, z.B. mittels Unterdruck oder mittels Hochtemperatur > 1750°C geläutert werden. Somit kann die erforderliche Blasenqualität über alternative Läutermittel und/oder alternative Läuterverfahren sichergestellt werden.

Bei dem Keramisieren ist dabei dafür Sorge zu tragen, daß die durch das Floaten erzielten niedrigen Rauhigkeitswerte nicht beeinträchtigt werden, indem z. B. die Keramisierung hängend oder durch eine Luftkissenkeramisierung erfolgt, d.h. generell ohne Berührung des zu keramisierenden Glaskörpers mit einer Unterlage.

Besondere Vorteile hinsichtlich einer sehr kleinen Rauhigkeit der Oberfläche der Glaskeramik werden durch ein gefloatetes, keramisiertes Aluminosilicatglas mit nachstehender Zusammensetzung in Gew.-% auf Oxidbasis erzielt.

| | |
|---|---|
| $Li_2O$ | 3,2-5,0 |
| $Na_2O$ | 0-1,5 |
| $K_2O$ | 0-1,5 |
| $\Sigma Na_2O+K_2O$ | 0,2-2,0 |
| MgO | 0,1-2,2 |
| CaO | 0-1,5 |
| SrO | 0-1,5 |
| BaO | 0-2,5 |
| ZnO | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |
| $P_2O_5$ | 0-3,0 |

Gemäß einer zweiten Weiterbildung weist das Glas in einer besonders bevorzugten Ausführungsform eine Zusammensetzung auf, in Gew.-% auf Oxidbasis von:

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| MgO | 0,3-2,0 |
| CaO | 0-1,0 |
| SrO | 0-1,0 |
| BaO | 0-2,5 |
| ZnO | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |

(fortgesetzt)

| | |
|---|---|
| $P_2O_5$ | 0-2,0 |

Dieses Glas wird mit besonderem Vorteil zum Herstellen des erfindungsgemäßen Glaskeramikkörpers verwendet, weil die entsprechende Oberfläche sehr reinigungsfreundlich ist.

**Patentansprüche**

1. Transparente Abdeckung der Strahlungsquelle von Lampen, bestehend aus einem Glaskörper aus thermisch vorspannbarem, gefloatetem Alumosilikatglas oder einer daraus keramisierten, gefloateten Glaskeramik, der eine Oberflächenstruktur mit einer Rauheit bestimmt durch den Mittenrauhwert $R_a \leq 0,02$ µm und/oder den quadratischen Mittenrauhwert $R_q \leq 0,01$ µm aufweist.

2. Abeckung nach Anspruch 1, hergestellt aus einem Ausgangsglas das floatbar, thermisch vorspannbar und in eine Glaskeramik mit Hochquarz-Mischkristallen oder Keatit-Mischkristallen umwandelbar ist, das einen Gehalt von weniger als 300 ppb Pt, weniger als 30 ppb Rh, weniger als 1,5 Gew.-% ZnO und weniger als 1 Gew.-% $SnO_2$ aufweist, das bei der Schmelze ohne Verwendung der üblichen Läutermittel Arsen- und/oder Antimonoxid geläutert ist und das seine Formgebung durch Aufgießen auf ein flüssiges Metall in einer reduzierenden Atmosphäre erhalten hat.

3. Abdeckung nach Anspruch 2 mit einem gefloateten Aluminosilicatglas als Ausgangsglas.

4. Abdeckung nach Anspruch 3, **gekennzeichnet durch** eine Zusammensetzung des Ausgangsglases (in Gew.-% auf Oxidbasis) von:

| | |
|---|---|
| $Li_2O$ | 3,2-5,0 |
| $Na_2O$ | 0-1,5 |
| $K_2O$ | 0-1,5 |
| $\Sigma Na_2O+K_2O$ | 0,2-2,0 |
| MgO | 0,1-2,2 |
| CaO | 0-1,5 |
| SrO | 0-1,5 |
| BaO | 0-2,5 |
| ZnO | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |

(fortgesetzt)

| | |
|---|---|
| $P_2O_5$ | 0-3,0 |

ggf. mit Zusatz färbender Kompomenten, wie V-, Cr-, Mn-, Fe-, Co-, Cu-, Ni-, Se-, Cl-Verbindungen.

5. Abdeckung nach Anspruch 4, **gekennzeichnet durch** eine Zusammensetzung des Ausgangsglases (in Gew.-% of Oxidbasis) von:

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| MgO | 0,3-2,0 |
| CaO | 0-1,0 |
| SrO | 0-1,0 |
| BaO | 0-2,5 |
| ZnO | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |
| $P_2O_5$ | 0-2,0 |

ggf. mit Zusatz färbender Kompomenten, wie V-, Cr-, Mn-, Fe-, Co-, Cu-, Ni-, Se-, Cl-Verbindungen.

6. Abdeckung nach einem der Ansprüche 3 bis 5, **gekennzeichnet dadurch**, daß für das Ausgangsglas zur Vermeidung der Entstehung eines schädlichen oberflächennahen Kristallbandes beim Floaten die Beziehung (in Gew.-%) : 3,2 x ZnO + $TiO_2 \leq 4,3$ gilt.

7. Abdeckung nach einem der Ansprüche 3 bis 6, **gekennzeichnet durch** Gehalte von weniger als 200 ppb $Fe_2O_3$ und weniger als 2,5 Gew.-% $TiO_2$ im Ausgangsglas, um einer störenden Einfärbung im glasigen Zustand entgegenzuwirken und um eine Lichttansmission bei 4 mm Dicke von > 89% bevorzugt, > 90% zu erreichen.

8. Abdeckung nach einem der Ansprüche 3 bis 7, **dadurch gekennzeichnet, daß** das Ausgangsglas technisch frei von BaO ist.

9. Abdeckung nach einem der Ansprüche 3 bis 8, **gekennzeichnet durch** einen Wärmeausdehnungskoeffizienten $\alpha_{20/300}$ zwischen 3,5 und 5,0 x $10^{-6}$/K, eine Transformationstempertur Tg zwischen 600 und 750° C und eine Verarbeitungstemperatur $V_A$ der Glaskeramik unter 1350° C.

10. Abdeckung nach einem der Ansprüche 3 bis 9, **gekennzeichnet durch** einen Wärmeausdehungskoeffizienten der Glaskeramik mit Keatit-Mischkristallen als vorherrschende Kristallphase von weniger als 1,5 x $10^{-6}$/K.

11. Abdeckung nach einem der Ansprüche 3 bis 9, **gekennzeichnet durch** einen Wärmeausdehungskoeffizienten der Glaskeramik mit Hochquarz-Mischkristallen als vorherrschende Kristallphase von (O ± 0,3) x $10^{-6}$/K, bevorzugt (O ± 0,15) x $10^{-6}$/K und eine Lichttransmission von > 80%.

12. Abdeckung nach einem der Ansprüche 3 bis 11, **gekennzeichnet dadurch**, daß zum Erreichen einer geringen Blasenzahl wenigstens ein alternatives chemisches Läutermittel, wie z.B. $SnO_2$, $CeO_2$, Sulfatverbindungen, Chloridverbindungen, bevorzugt 0,2-0,6 Gew.-% $SnO_2$ der Glasschmelze zugesetzt ist.

13. Abdeckung nach einem der Ansprüche 3 bis 11, **gekennzeichnet dadurch**, daß zum Erreichen einer geringen Blasenzahl die Glasschmelze physikalisch, z.B. mittels Unterdruck oder mittels Hochtemperatur > 1750° C geläutert ist.

## EUROPÄISCHER RECHERCHENBERICHT

Europäisches Patentamt

**Nummer der Anmeldung**

EP 01 10 6775

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>vol. 1996, no. 03,<br>29. März 1996 (1996-03-29)<br>& JP 07 296782 A (IWASAKI ELECTRIC CO LTD), 10. November 1995 (1995-11-10)<br>* Zusammenfassung *<br>--- | 1-13 | H01J61/30 |
| A | PATENT ABSTRACTS OF JAPAN<br>vol. 018, no. 139 (E-1519),<br>8. März 1994 (1994-03-08)<br>& JP 05 325893 A (MATSUSHITA ELECTRIC IND CO LTD), 10. Dezember 1993 (1993-12-10)<br>* Zusammenfassung *<br>--- | 1-13 | |
| A | PATENT ABSTRACTS OF JAPAN<br>vol. 015, no. 221 (C-0838),<br>6. Juni 1991 (1991-06-06)<br>& JP 03 065529 A (SHARP CORP),<br>20. März 1991 (1991-03-20)<br>* Zusammenfassung *<br>----- | 1-13 | |

**RECHERCHIERTE SACHGEBIETE (Int.Cl.7)**

H01J

Der vorliegende Recherchenbericht wurde für alle Patentansprüche erstellt

| Recherchenort | Abschlußdatum der Recherche | Prüfer |
|---|---|---|
| DEN HAAG | 13. Juli 2001 | Deroubaix, P |

## ANHANG ZUM EUROPÄISCHEN RECHERCHENBERICHT
## ÜBER DIE EUROPÄISCHE PATENTANMELDUNG NR.

EP 01 10 6775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2001

| Im Recherchenbericht angeführtes Patentdokument | Datum der Veröffentlichung | Mitglied(er) der Patentfamilie | Datum der Veröffentlichung |
|---|---|---|---|
| JP 07296782 A | 10-11-1995 | KEINE | |
| JP 05325893 A | 10-12-1993 | KEINE | |
| JP 03065529 A | 20-03-1991 | KEINE | |

EPO FORM P0461

Für nähere Einzelheiten zu diesem Anhang : siehe Amtsblatt des Europäischen Patentamts, Nr.12/82